# EUROPEAN PATENT SPECIFICATION

(11) **EP 2 090 183 B1**
(45) Date of publication and mention of the grant of the patent: **25.01.2012**
(21) Application number: 07823008.3
(22) Date of filing: 24.10.2007
(51) Int. Cl.: A23L 1/317, A23P 1/08

(54) **SAUSAGE ARTICLE**
WURSTARTIKEL
ARTICLE DE CHARCUTERIE

(30) Priority: 06.11.2006 ES 200602383 U
(43) Date of publication of application: 19.08.2009
(73) Proprietor: Hijos De Jose Casaponsa, S.A., 17813 Vall de Bianya Girona (ES)
(72) Inventor: PAREROLS MORATALLA, José, 17813 Vall de Bianya (Girona) (ES)
(74) Representative: Evens, Paul Jonathan
(86) International application number: PCT/ES2007/000601
(87) International publication number: WO 2008/056008

(56) References cited:
- EP-A1- 0 641 520
- DE-A1- 10 318 095
- ES-U- 1 005 734
- ES-U- 1 051 771
- JP-A- 59 130 166
- US-A- 2 937 092
- US-A- 3 959 503
- CATALOGO DE NOVEDADES DE LA EMPRESA CASAPONSA, [Online] 02 September 2004, XP008138115 Retrieved from the Internet: <URL:http://www.casaponsa.com/esp/news_sp.h tm>
- URL:http://www.web.archive.org/web/http:www .casaponsa.com. Direccion para comprobacion of fecha of divulgacion in Internet del catalogo of novedades of the empresa Casaponsa XP008138115
- Dr.Oetker: "Lexikon Lebensmittel und Ernährung", 1 May 1989 (1989-05-01), Ceres Verlag, Bielefeld vol. 3, page 641, * Wurstwaren *
- R.Wellhäuser: "Fleischwaren" In: Rudolf Heiss: "Lebensmitteltechnologie", Springer Verlag vol. 6, page 66, * the whole document *

## Description

### Field of the Art

The present invention relates to the commercial presentation of ready-to-consume sausage products, proposing a sausage article, which can be a cured or cooked product, in which a particular presentation form has been provided, including a formation for the addition and protection of complementary additive products, such as spices or the liken

### Background

The sausages are generally marketed as prepared articles or masses in ready-to-consume conditions such that the consumer only has to cut from said articles the parts he wishes to consume in each case.

However, taste tests have shown that accompanying the sausage products with additional products or additives, such as spices, jellies, cheese, etc., confers it with qualities which have a considerably advantageous effect on the organoleptic and presentation characteristics of the sausages by themselves.

Accordingly, its is common practice today to accompany the sausages with complementary products of those mentioned, which is done by adding to the sausage product the complementary product or products in the preparation for consumption, whin involves a cumbersome task in addition to needing to have the different products separately, with the storage and handling drawbacks this entails.

ES1051771U discloses a meat body having cavities filled with chocolate, which is incorporated into the body during its shaping (extrusion) process.

US2937092 discloses a meat body having a cavity filled with cheese. The meat body is formed by means of a mold which also shapes the inner cavity (27).

US2937092 discloses a frankfurter body which is formed with a cavity containing a filling and then wrapped in a casing.

DE10318095 describes a sausage product formed by a meat body. The surface of the body is formed with cavities in which small pieces or grains of complementary products are located. Almost the entire surface of the food is encased in these complementary products, which form an almost homogeneous layer. A gelatine casing is then applied.

EP0641520 discloses a food product comprising a cavity made by moulding and into which is applied a filling. The cavity is then closed by a rn.eat-based cover.

ES1005734 relates to a product formed by a sausage-shaped body having inside a longitudinal cavity filled with a complementary product so that the cavity remains sealed at the ends of the body by the very material of the body.

### Disclosure of Invention

According to the invention there is provided a method of making a sausage article characterised by the steps of
forming a body or mass of cooked or cured product, with a configuration defined by a casing the configuration including a recessed surface area of said casing defining compartmentalized independent hollows in order to house different complementary products;
filling the compartmentalized independent hollows with different complementary products, which are integrated in the body as independent products but which form a single unit with the sausage product for consumption.

The hollows in the body of the sausage product may be formed in different areas or faces of the configuration of said body in order to house identical or different complementary products in the respective hollows of the various areas.

A sausage article is thus obtained which incorporates in a single unit the sausage product and the complementaxy addition products, which allows directly obtaining the taste qualities provided by the combination of the associated products, for which purpose the consumer only has to cut from the article the parts or portions he wishes to consume, without the complexity of handling different products.

The integration of the various component products in the article is furthermore done independently with regard to the sausage product, such that the complementary products are in a Combined arrangement but not mixed with the sausage product, which means that the characteristics belonging to each of the products remain unchanged.

As a result, said sausage article object of the invention has certainly advantageous features, having its own identify and preferred nature with regard to the presentations of conventional sausage articles.

### Description of the Drawings

Figure 1 shows a perspective view of a non-limiting example of a sausage article defined with a hollow for complementary products.
Figure 2 is a cross-section view of an article such as that in the previous figure, with the hollow defined therein with a complementary product filling.
Figure 3 is a plan view of an article such as that of Figure 1, with the hollow defined therein filled with a complementary product.
Figure 4. is a plan view of an example of a sausage article according to the invention and provided with a hollow compartmentalized into sections, including various complementary products in the different sections of the hollow.

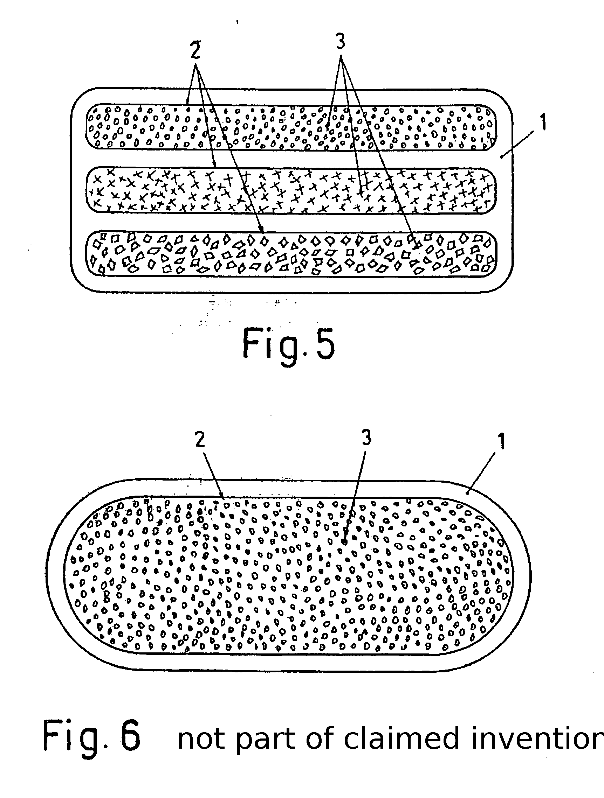

Figures 5 and 6 are other embodiments of a sausage article.

### Detailed Description of the Invention

The object of the invention relates to a sausage article made with configurations features to incorporate thereon complementary products, such spices, jellies, cheese, etc., such that said complementary products are associated to the sausage article as independent products but forming a single unit with such article for consumption.

A sausage article can be a cured or cooked product, forming a body or mass (1) of any conventional presentation form of the sausages, either formed in a mold or not.

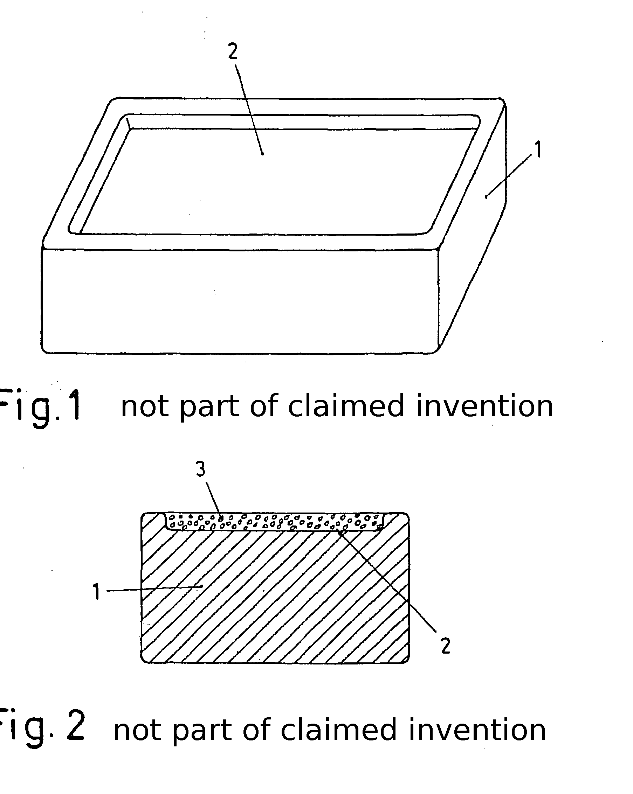

In the mentioned body (1) of the sausage articles the formation of at least one recessed area, defining, as can be observed in Figure 1, a hollow (2), intended to include therein a complementary product filling (3) , as depicted in Figure 2, is determined.

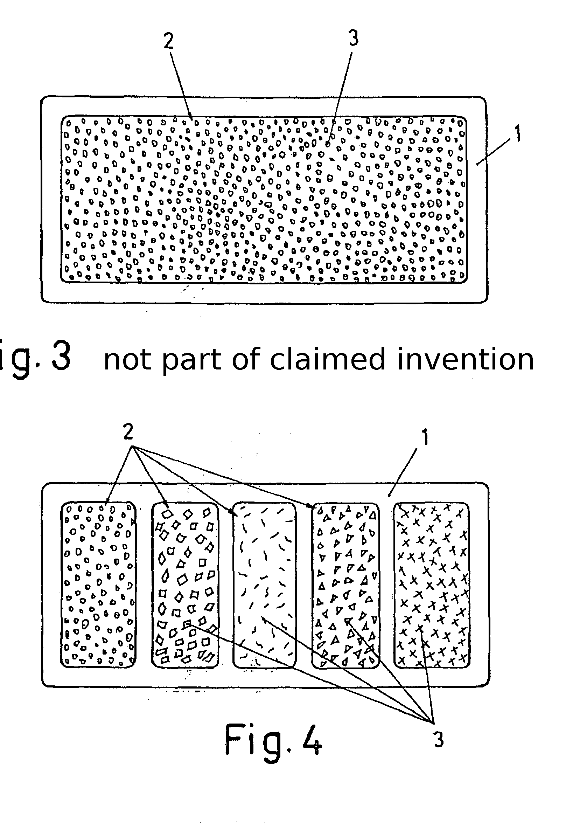

Said pressure applied in the body (1) of the sausage article can form a single hollow (2) to incorporate only one complementary product (3), as depicted in Figure 3. According to the invention, the cavity can be formed in a compartmentalized manner, forming a division of two or more hollows (2) in order, to house therein various complementary products (3), as depicted in Figure 4.

Likewise, single or compartmentalized hollow cavities (2) can be formed in the body (1) of one and the same sausages article, in different parts of the mentioned body (1) of the article, such as for example in opposite parts of the contour or on different faces, in order to incorporate identical or different complementary products (3) in said hollows (2) of the different areas.

The configuration of the recessing forming the hollows (2) in the body (1) of the sausage articles according to the invention can in any case be done by means of any conventional process, for example by pressure with a plate having the shape of the hollow (2) to be formed, or by means of formation in a mold, without these practices being limiting.

## Claims

1. Method of making a sausage article **characterised by** the steps of
forming a body or mass (1) of cooked or cured product, with a configuration defined by a casing, the configuration including a recessed surface area of said casing defining compartmentalized independent hollows (2) in order to house different complementary products (3);
filling the compartmentalized independent hollows (2) with different complementary products (3), which are integrated in the body (1) as independent products but which form a single unit with the sausage product for consumption.

2. Method of making a sausage article according to claim 1, **characterized by** the step of forming the hollows (2) in the body (1) of the sausage product in different areas or faces of the configuration of said body (1) in order to house identical or different complementary products (3) in the respective hollows (2) of the various areas.

## Patentansprüche

1. Verfahren zur Herstellung eines Wurstartikels, das durch die folgenden schritte **gekennzeichnet** ist:
Bilden eines Körpers oder einer Masse (1) aus gekochtem oder gepökeltem Produkt mit einer durch eine Hülle definierten Konfiguration, die einen ausgesparten Oberflächenbereich der genannten Hülle aufweist, der unterteilte unabhängige Hohlräume (2) zur Aufnahme verschiedener Ergänzungsprodukte (3) definiert;
Füllen der unterteilten unabhängigen Hohlräume (2) mit verschiedenen Ergänzungsprodukten (3), die im Körper (1) als unabhängige Produkte eingebunden werden, aber mit dem Wurstprodukt eine einzige Einheit für den Verzehr bilden.

2. Verfahren zur Herstellung eines Wurstartikels nach Anspruch 1, **gekennzeichnet durch** den Schritt des Bildens der Hohlräume (2) in dem Körper (1) des Wurstprodukts in verschiedenen Bereichen oder Flächen der Konfiguration des genannten Körpers (1) zum Aufnehmen gleicher oder unterschiedlicher Ergänzungsprodukte (32) in den jeweiligen Hohlräumen (2) der verschiedenen Bereiche.

## Revendications

1. Procédé de fabrication d'un article de charcuterie **caractérisé par** les étapes consistant à :
former un corps ou une masse (1) de produit cuit ou saumuré/sec, avec une configuration définie par une enveloppe, la configuration englobant une zone superficielle en retrait de ladite enveloppe définissant des évidements compartimentés indépendants (2) afin de recevoir différents produits complémentaires (3) ;
remplir les évidements compartimentés indépendants (2) de différents produits complémentaires (3) lesquels sont intégrés au corps (1) sous la forme de produits indépendants mais qui constituent une unité individuelle avec le produit de charcuterie à des fins de consommation.

2. Procédé de fabrication d'un article de charcuterie selon la revendication 1, **caractérisé par** l'étape consistant à former les évidements (2) dans le corps (1) du produit de charcuterie dans différentes zones ou faces de la configuration dudit corps (1) afin de mettre des produits complémentaires (3) différents ou identiques dans les évidements respectifs (2) des diverses zones.
